# EUROPEAN PATENT SPECIFICATION

(11) **EP 1 211 954 B1**
(45) Date of publication and mention of the grant of the patent: **12.11.2003**
(21) Application number: 00963154.0
(22) Date of filing: 13.09.2000
(51) Int. Cl.: A23K 3/03, A23K 3/00, A23L 3/3517, A23L 3/3526, A23B 4/20, A23B 7/154

(54) **AQUEOUS PRESERVATIVE/ACIDIFIER**
WAESSRIGES KONSERVIERUNGS- BZW. SAEUERUNGSMITTEL
CONSERVATEUR/ACIDIFIANT AQUEUX

(30) Priority: 15.09.1999 NO 994462
(43) Date of publication of application: 12.06.2002
(73) Proprietor: NORSK HYDRO ASA, 0240 Oslo (NO)
(72) Inventor: HJORNEVIK, Leif, N-3714 Skien (NO); JOHNSEN, Freddy, N-1927 Ranasfoss (NO); SELMER-OLSEN, Ingvar, N-1473 Skarer (NO)
(74) Representative: Wallace, Sheila Jane
(86) International application number: NO0000300
(87) International publication number: WO01019207

(56) References cited:
- WO-A1-00/08929
- WO-A1-99/12435
- US-A- 4 220 661
- PATENT ABSTRACTS OF JAPAN & JP 01 074 955 A (MITSUI TOATSU CHEM INC) 20 March 1989

## Description

The present invention relates to an aqueous preservative/acidifier for grass and other agricultural crops, fish and fish products and meat products, having reduced corrosiveness and irritation to the skin.

Preserving high moisture grass as silage in anaerobic conditions has been common practice for many years. A fast drop in pH is important to inhibit plant respiration, enzymatic protein breakdown and development of undesired bacteria. The only desired process is the lactic acid fermentation, which stabilises the silage at a low pH. The initial drop in pH from approx. 6 to approx. 4.5 is commonly obtained by adding formic acid at a rate of 2-5 litres/ton grass. Field surveys have shown that formic acid based silage additives have been the most efficient additives for high moisture grass (Nordang, L.Ø. "Surforundersøkelsen 1989-90", Faginfo, Statens fagtjeneste for landbruket, 6, 1991 and ADAS 1995, "Effect of additives on DM in fermentation" Grass Farmer, 57,11). The problem with 85% formic acid as a silage additive is the high level of corrosion on skin and metal (machinery).

The principles of silage preservation of meat- and fish offals are basically the same as for grass. However, even more stress is put on an efficient acidifier to reduce the pH. This is because the offals of animal origin contain very little sugar to produce lactic acid, and the buffering capacity is high.

Mixtures of formic acid and formate salts and also other organic acids (propionic acid and acetic acid and their respective salts) have been developed to reduce the corrosiveness of the acid product. The most successful product formulation in terms of efficient preservation and success in the market place has been ammonium tetraformate, comprising approx. 64% formic acid and approx. 6% ammonia and the balance being water (NO 144557). It is important that a formate product has the ability to reduce the pH in the grass significantly and still not be corrosive to skin and metal (machinery).

The plain ammonium tetraformate (ATF), with 64.5% formic acid and 6% ammonia, has been better than standard 85% formic acid in terms of burns to skin, but not good enough to be classed as non-corrosive.

Corrosion on carbon steel has been overcome by adding corrosion inhibitors such as cocobetaine or polyglycoside (Norwegian Patent No. 305.301B1). Corrosion on skin has, however, been too extensive, and the product has been labelled with the "Corrosion" sign and the risk phrase: "Causes burns".

The object of the invention was therefore to find a way to reduce skin corrosion of an ATF type preservative, but maintain an effective formate content, obtaining the same pH-reducing effect in grass and the same good effect on silage fermentation quality as the known preservative.

The inventors tried to solve the problem by testing combinations of ammonium salts and potassium salts of formic acid rather than using a stronger neutralisation of either salt in view of the following:
■ Pure potassium formate/formic acid mixtures have too high freezing point (crystallisation point) compared with ammonium formate/formic acid mixtures (ATF).
■ Potassium is more expensive than ammonia.
■ Increasing the ammonium content from the standard 6% in ATF to for example 9% would make farmers believe that the silage quality has become worse. Ammonia is a common parameter indicating protein breakdown in the silage. The more ammonia added with the silage additive, the worse it looks in terms of high ammonia levels.
■ Reducing the skin effects by adding more ammonium to ATF increases pH of the silage additive more than adding necessary amounts of potassium. From a preservation point of view a low pH in the additive is desired.

The inventors tested out various preservatives within the above prerequisites and it was then surprisingly found that when potassium, in the form of KOH, potassium formate or other suitable K-compounds which would increase the pH of the preservative/acidifier, was added to ATF it appeared to be more effective than using increased ammonium levels when compared at the same pH of the solutions. It was found that by increasing pH from a level of 2.3-2.7 to a level of 3.0-3.1 by use of KOH this resulted in a significant difference in terms of skin irritation. Suitable K-compounds in addition to KOH will be potassium carbonates, and the organic compounds potassium formate, potassium propionate and potassium benzoate. Similar effects as with the said K-compounds were found when corresponding sodium compounds were used.

Further tests showed that the ATF could also be mixed with acetic acid and/or propionic acid and still obtain the reduced skin irritation, even benzoic acid could in some cases be advantageous to mix with the basic ATF preservative, provided that either a suitable potassium compound or sodium compound was added in sufficient amounts to increase the pH as stated above. Potassium has a better effect than sodium, which compared to potassium has to be added in larger amounts. Thus, when 2-6 weight% potassium is sufficient to get reduced skin irritation effect, an addition of 2-10 weight% sodium will be necessary.

The aqueous preservative/acidifier according to the invention comprises at least 50 weight% either formic acid and formate salts or ammonium tetraformate and 2-6 weight% potassium or 2-10 weight% sodium in the form of their hydroxide, formate or other suitable kalium- or sodium compounds which will increase the pH of the preservative/acidifier.

The preservative/acidifier may contain 4-7 weight% ammonia and the pH should be in the range 2.7-3.5, the most preferred pH range is 2.9-3.1.

The preservative/acidifier may contain acetic and/or propionic acid.

The preservative/acidifier may contain propionic and benzoic acid, 4.5-6.0 weight% potassium and have a pH in the range of 2.9-3.3.

The amount of formic acid and formate salts can be 50-90 weight%, depending on the amount of other acids like acetic acid, propionic acid and benzoic acid.

The invention will be further explained and elucidated in the following examples and the description of the figures:
- Fig.1: shows the skin reaction after 1-24 hours when using ATF with added NH₃ or potassium.
- Fig. 2: shows skin reaction 15 days after exposure when using ATF with added NH₃ or potassium.
- Fig. 3: shows dermal reaction index days 1-8 after one hour exposure using ATF with added NH₃ or potassium.
- Fig. 4: shows pH of high moisture grass 4 hours after adding different rates of preservative.

### 1. Example 1

### 1.1 Method

The test animals (rabbits) were exposed to the samples on local areas of shaved skin for 4 hours according to Annex to Commission Directive 92/69/EEC, Method B4; OECD Guidelines for Testing of Chemicals, Method 404 and US EPA Health Effects Test Guidelines OPPTS 870.2500 (1,2,3). Skin reactions were recorded after 1 hour, 24 hours, 48 hours, 72 hours, 8 days, 15 days and 22 days. If there were severe burns to skin with erosion and/or necrotic tissue, the animals were terminated very soon, and degree of healing was not assessed. The animals who had milder reactions were kept until day 22. It is critical whether the test animals show a complete healing of the skin (regenerating skin with hair), or whether there are scars (permanent damage). Three animals were used to assess the effect of each sample.

In order to present the skin reaction as a numerical parameter a score was made for each observed effect. The mean value of the 3 animals (in some cases 4) at an early stage (1-24 hours after exposure) was calculated for each sample. The degree of lasting skin damage was calculated from the readings at day 15 after exposure.

A score was given for each observation based on the severity of the different reactions.

| **Early reactions (1-24 hours after exposure)** | | |
|---|---|---|
| **Code** | **Reaction** | **Severity score** |
| 0 | no sign | 0 |
| wh | blanching | 0.5 |
| + | blue coloration to test site | 1.0 |
| # | brown coloration | 1.5 |
| ph | petechial haemorrhage | 1.5 |
| cba | blanched area showing signs of chemical burn | 3 |
| cb | chemical burn (no erosion) | 4 |
| ce | corrosion/chemical burn - and areas of site eroded | 5 |
| term. | rabbit was killed | 5 |

| **Healing reactions (day 15 after exposure)** | | |
|---|---|---|
| **Code** | **Healing reaction** | **Severity score** |
| 0 / ns | intact skin and hair / new skin | 0 |
| sc | scabbing / desquamation | 2 |
| es | eschar | 5 |
| ns@ | new skin with scar tissue | 5 |
| term. | rabbit was killed | 5 |

### 1.2 Results

Different approaches were chosen to search for a possible additive to the basic ammonium tetraformate, ATF (64% formic acid, 6% ammonia and 30% water).

Cocobetaine added to ATF is efficiently reducing the corrosion on carbon steel. As can be seen from Table 1, it had no significant effect on skin corrosion. Antioxidants (etoxyquin) can also reduce corrosion on steel, but the mode of action is obviously different from what was observed on skin.

Increasing pH of the ATF was expected to give a milder reaction to skin. Exactly how much the pH would need to be raised to get significant improvements was not obvious, and even the experienced laboratory used could not tell. It was surprising to see that there is not a simple relation between pH and the effects on skin. A small amount of potassium added to ATF was more efficient than bigger amounts of ammonia added to ATF, in spite of the fact that the latter had higher pH.

There were individual variations between animals on the same treatment. The severity of reactions to those animals who showed effects was carefully evaluated by the independent laboratory according to standard procedures. The results from the experiments of this example, additives to ammonium tetraformate, ATF (64% formic acid, 6% ammonia), are shown in the Table 1.

**Table 1**

| | | | **Time after completion of 4 hour exposure** | | | | | | | **Reaction score (mean)** | |
|---|---|---|---|---|---|---|---|---|---|---|---|
| Sample | pH | Animal | 1h | 24h | 48h | 72h | Day 8 | Day 15 | Day 22 | Early 1-24h | Day 15 |
| ATF | 2.67 | 36m | + | + | 0 | 0 | 0 | 0 | 0 | | |
| | | 45m | +# | cb | cb | cb | pe | es,ns | ns@ | 3.3 | 3.3 |
| | | 46m | +# | ce | ce | ce | pe | es,ns | ns@,sc | | |
| ATF +0,2% cocobetaine | 2.67 | 37m | 0 | 0 | 0 | 0 | 0 | 0 | 0 | | |
| | | 47m | # | cb | cb | cb | cb,pe | sc3 | 0 | 3.5 | 1.8 |
| | | 48m | +# | ce | ce | ce | ce,pe | ns | 0 | | |
| | | 61f | ce | term. | term. | term. | term. | term. | term. | | |
| ATF | 2.67 | 40m | # | # | 0 | 0 | 0 | 0 | 0 | | |
| +antioxidant | | 54m | # | cb | cb | cb | sc,cb,pe | sc2 | | 3.5 | 2.3 |
| (etoxyquin) | | 55m | #,ce | term | term. | term. | term. | term. | term. | | |
| ATF +3% extra ammonia | 3.42 | 63f | wh,+,cb | es,wh, | es,at, | es,at, | es,pe, | es,pe, | sc,ns | | |
| | | 72f | +,ph1 | # | wh, # | wh, # | at2 | sc,ns | | 2.3 | 1.7 |
| | | 73f | wh,# | + | + | cb,+ | + | 0 | 0 | | |
| | | | | wh,# | wh,# | #,wh | sc | ns | 0 | | |
| ATF +6% extra ammonia | 4.06 | 64f | cb1 | cb1,wh | wh | wh | sc | 0 | | | |
| | | 74f | 0 | 0 | 0 | 0 | 0 | 0 | | 1.5 | 1.7 |
| | | 75f | ph1,#,wh | #,wh,sc | #,at1, | #,at1, | sc | ns@ | | | |
| | | | 1,sc | | wh, sc | nc,fs | | | | | |
| ATF +2.8% potassium | 2.97 | 65f | 0 | 0 | 0 | 0 | 0 | 0 | 0 | | |
| | | 76f | 0 | wh | wh | wh | sc | ns | 0 | 0.3 | 0.7 |
| | | 77f | wh | wh | #,cba | cba,# | cb,sc | ns,sc | | | |
| ATF +5.6% potassium | 3.3 | 67f | wh | wh,# | wh,# | wh,# | sc1 | 0 | | | |
| | 0 | 96f | cb | cb,wh | cb,wh | wh | sc | ns | | 1.8 | 0 |
| | | 97f | 0 | 0 | 0 | 0 | 0 | 0 | | | |

### Reactions

- 0: no sign
- wh: blanching
- +: blue coloration to test site
- #: brown coloration
- ph: petechial haemorrhage
- cba: blanched area showing signs of chemical burn
- cb: chemical burn (no erosion)
- ce: corrosion/chemical bum - and areas of site eroded
- nc: necrotic tissue
- at: atonia
- fs: fissuring
- pe: peeling
- term.: rabbit was killed
- ns: new skin revealed
- sc: scabbing
- es: eschar
- ns@: new skin with scar tissue

Number after the code indicates number of affected areas of the site.

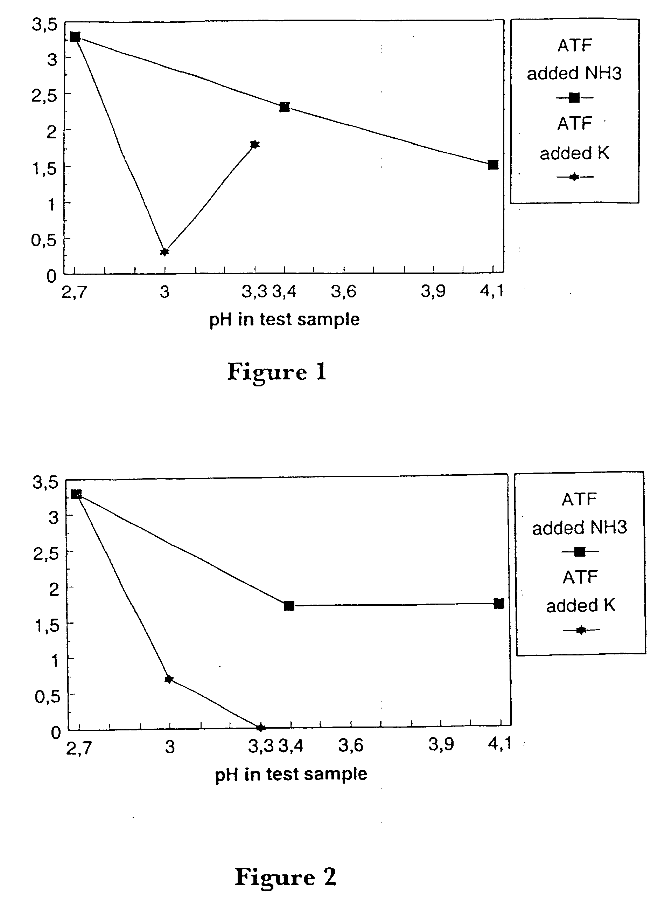

Figures 1 and 2 show that there was a stronger effect of adding potassium to ATF than of adding more ammonia. This means that it is easier to maintain the acidifying effect of the silage additive when controlling skin reactions with potassium than with ammonia. In Figures 1 and 2 data at pH 2.7 are for plain ATF without any extra addition. The values given are mean of 3 animals.

Adding 2.8% potassium to ATF increased the pH from 2.67 to 2.97, and the silage additive went from having a corrosive nature to being non-corrosive (only irritating). Adding ammonia to reach even higher pH did not bring the product from the corrosive to the non-corrosive class.

### 2. Example 2

In order to see more clearly the effects of increasing potassium levels in ATF on the skin irritation, another study was carried out.

### 2.1 Method

In this study the standard procedure was not followed. A tolerance test was set up on the basis of experiences from Example 1 with the aim of providing statistically stronger data eliminating the effect of individual animals. A group of 5 rabbits was exposed to duplicate test sites of all the 5 samples. This provided 10 replicate observations for each treatment. The treatments were ATF, ATF+2.8%K, ATF+4.2%K, ATF+5.6%K, ATF+3%NH₃.

The samples were applied with semi-occlusive dressings to the rabbit skin for 1 hour. After exposure readings were done after 5, 15, 30 and 60 minutes after removal of the dressing, and then at hourly intervals for the remainder of day 1. Assessments were then recorded twice in the morning and twice in the afternoon on days 2 to 5 and a single observation was recorded for days 6, 7 and 8.

### 2.2 Results

A grading of erythema and oedema was used as follows:
0= no sign
1= slight signs
2= well defined
3= moderate
4= severe erythema/oedema

A mean of the 24, 48 and 72 hour scores for the 10 observations was given for erythema and oedema for the five samples. These results are presented in Table 2 below:

**Table 2**

| **Sample** | **ATF*** | **ATF+2.8%K** | **ATF+4.2%K** | **ATF+5.6%K** | **ATF+3%NH**_{**3**} |
|---|---|---|---|---|---|
| pH of sample | 2.7 | 3.0 | 3.15 | 3.3 | 3.4 |
| 24-72h Erythema | 0.61 | 0.08 | 0.03 | 0.12 | 0.00 |
| 24-72 h Oedema | 0.68 | 0.09 | 0.03 | 0.03 | 0.00 |

| | | | | | |
|---|---|---|---|---|---|
| * ATF=64.5% formic acid + 6% ammonia | | | | | |

The results show that the skin irritation in terms of erythema and oedema was significantly reduced already at pH 3.0 with 2.8% potassium added to ATF.

A more detailed numerical index of the local tolerance of the various compounds was then made. An arbitrary value was placed on each dermal change as follows:

| **Score** | **Reaction** |
|---|---|
| 0 | no sign |
| 0.5 | desquamation and scratches |
| 1.0 | brown staining, scab formation, blanching |
| 2.0 | atonia, induration, petechial haemorrhage, market blanching/blackening |
| 3.0 | fissuring and bruising |
| 4.0 | eschar |

These values were summed on a daily basis and a mean day value calculated for each observation point and then this value was added to the mean erythema and oedema value. Finally the daily values were summed to obtain the index.

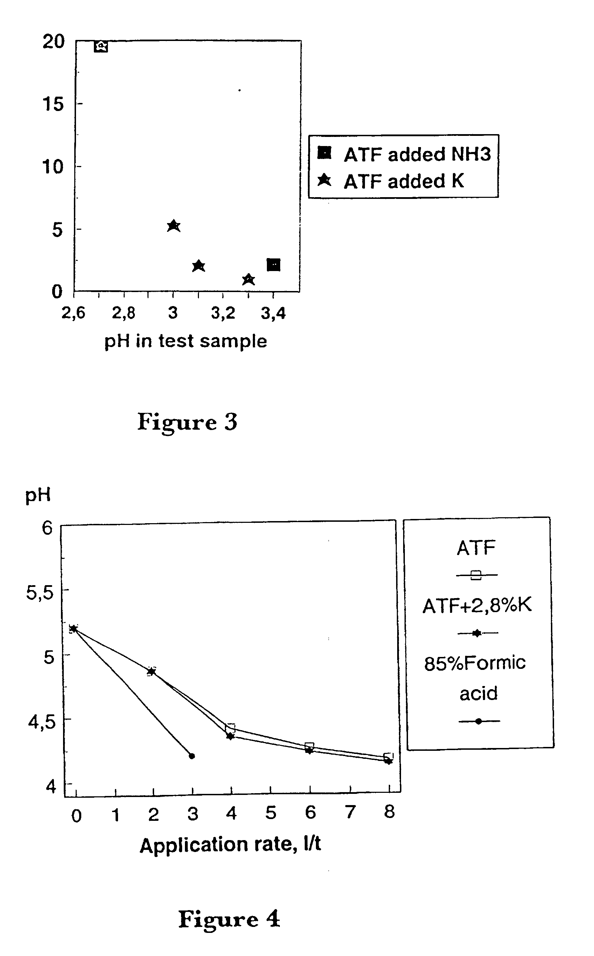

The result of the index evaluation is presented in Figure 3 which shows the Index of Dermal Reactions 0-8 days after 1 hour exposure with increasing pH due to addition of extra NH₃ or K. The values are mean of 10 observations from 5 animals.

The figure shows that a very low value is obtained already with 2.8% K, but a further reduction is obtained by increasing K further. Considering the even higher pH of the ATF+3%NH₃ sample compared to the potassium added samples, the index was slightly higher with extra ammonia. Again this is an indication of the surprisingly good effect of potassium in reducing skin irritation.

### 3. Example 3

It is important that the acidifying effect of the additive and the resulting silage fermentation quality is not destroyed as a result of adding potassium to the ammonium tetraformate.

### 3.1 Methods

Grass was added normal rates (4 litres/ton) of ATF with or without extra potassium. After maceration and 1 hour stabilisation, pH was measured.

Two silage experiments were carried out in which grass was ensiled in duplicate laboratory silos added ATF and ATF with extra potassium. After two months storage at 20°C, silages were sampled and analysed. In experiment 1, the grass (timothy and meadow fescue) contained 20.4% dry matter (DM), 11.3% water soluble carbohydrates (WSC) in DM, 13.0% crude protein in DM and Buffering Capacity of 26.8 m.ekv./100 g DM. In experiment 2, the grass (timothy, meadow fescue and a little red clover) contained 15.7% DM, 11.5 % WSC in DM, 12.7% crude protein in DM and Buffering Capacity of 31.7 m.ekv./100 g DM.

### 3.2 Results

Although adding 2.8% potassium to ATF increased pH from 2.67 to 2.97 there was no difference in the ability to drop pH in grass. The results are shown in Figure 4 which shows pH of high moisture grass 4 hours after adding different rates of formic acid (85%), ammonium tetraformate (ATF) and ATF + potassium formate (ATF+2.8%K). The values are mean of 2 samples. The results were surprising and must be due to the complex buffer system of grass and formates. It means that it could be expected similar preservation of grass with ATF+2,8-5.6%K as with pure ATF (or 85% formic acid). This was confirmed by the results of the silage experiments, *Grass silage quality at 60 days fermentation,* which are presented in Table 3 below. Especially corrected ammonia - N as percentage total N showed a similar effect of the treatments compared with the untreated control.

**Table 3**

| | **Untreated** | **85% Formic acid, 3 l/t** | **ATF 4 l/t** | **ATF+ 2.8%K 4 l/t** | **ATF+ 4.2%K 4 l/t** | **ATF+ 5.6%K 4 l/t** |
|---|---|---|---|---|---|---|
| **Expt 1** | | | | | | |
| pH | 3.80 | 3.71 | 3.75 | 3.75 | - | 3.80 |
| NH3-N % total N* | 9.0 | 5.3 | 7.0 | 6.5 | - | 6.1 |
| Lactic acid % FM | 2.24 | 1.62 | 1.91 | 1.75 | - | 1.78 |
| Acetic acid % FM | 0.26 | 0.23 | 0.24 | 0.22 | - | 0.23 |
| Ethanol % FM | 0.11 | 0.10 | 0.09 | 0.06 | - | 0.09 |
| | | | | | | |

| **Expt 2** | | | | | | |
|---|---|---|---|---|---|---|
| pH | 3.84 | 3.84 | 3.85 | - | 3.86 | 3.86 |
| NH₃-N% total N* | 10.2 | 6.0 | 6.6 | - | 6.5 | 6.4 |
| Lactic acid % FM | 1.96 | 0.81 | 1.22 | - | 1.17 | 1.05 |
| Acetic acid % FM | 0.26 | 0.28 | 0.28 | - | 0.31 | 0.34 |
| Ethanol % FM | 0.11 | 0.16 | 0.27 | - | 0.24 | 0.16 |

| | | | | | | |
|---|---|---|---|---|---|---|
| * corrected for ammonia applied with the additive | | | | | | |
| FM= fresh matter | | | | | | |

### 4. Example 4

Another silage additive was also developed with the aim of restricting both bacteria and fungi in the silage. Therefore this product contained a mixture of formates/- formic acid, propionic acid and benzoic acid. Such additives are well known in preservatives. In order to dissolve a maximum of benzoic acid in the product, the product had to be more concentrated (contain less water) than the ATF product described in Examples 1-3. A more concentrated product and a mixture of three acids (formic-, propionic- and benzoic acid) could have very different properties in terms of skin irritation. So there was an open question as to how potassium (KOH) would affect skin irritation and what levels one would need to avoid corrosion to skin. The recipes studied were as listed in Table 4 below showing composition of samples (%) and reaction score on rabbit skin. The skin reactions were calculated as in Example 1:

**Table 4**

| Sample No | 1 | 2 | 3 | 4 | 5 | 6 |
|---|---|---|---|---|---|---|
| Formic acid | 72.5 | 61.9 | 59.6 | 59.7 | 58.8 | 57.0 |
| Ammonia | 6.5 | 5.8 | 5.8 | 5.7 | 5.7 | 5.6 |
| Potassium formate | 0 | 6.3 | 9.8 | 10.9 | 11.8 | 12.7 |
| Propionic acid | 5.0 | 9.7 | 9.6 | 9.4 | 9.3 | 9.1 |
| Benzoic acid + derivatives | 2.0 | 2.9 | 2.9 | 1.9 | 1.9 | 1.9 |
| Water | 14 | 13.4 | 12.3 | 12.0 | 12.1 | 12.3 |
| Level of K | 0 | 2.9 | 4.6 | 5.0 | 5.5 | 5.9 |
| pH | 2.3 | 2.7 | 3.0 | 3.1 | 3.2 | 3.3 |
| Early reactions (1-24 h) | 5 | 5 | 2.8 | 0.7 | 1.0 | 0 |
| Late reactions (day 15) | (5) animal killed | (5) animal killed | 3.3 | 0.7 | 1.6 | 0 |

The results showed that a level of approximately 5% K and pH of 3.1 was required to avoid serious skin damage with products based on mixtures of formic acid/- formates, propionic acid and benzoic acid and a water content of 12-14 %. This is in contrast to the pure ATF with 28% water in which only 2.8% potassium and pH increased from 2.67 to 2.97 was enough to avoid the corrosive nature of the product.

The inventors have by the present invention been able to arrive at a preservative having low corrosiveness and skin irritation and still having the low pH necessary for obtaining the same preservative effect as known preservatives having significantly higher skin irritating effect. This has been obtained by simply adding minor amounts of a potassium or a sodium compound to common preservatives.

## Claims

1. Aqueous preservative/acidifier for grass and other agricultural crops, fish and fish products and meat products, having reduced corrosiveness and irritation to the skin, comprising at least 50 weight% either formic acid and formate salts or ammonium tetraformate and 2-6 weight% potassium or 2-10 weight% sodium in the form of their hydroxide, formate or other suitable potassium or sodium compounds which will increase the pH of the preservative/acidifier.

2. Preservative/acidifier according to claim 1,
**characterised in that**
the preservative/acidifier contains 4-7 weight% ammonia and that the pH of the preservative/acidifier is in the range of 2.7-3.5.

3. Preservative/acidifier according to claim 1,
**characterised in that**
the preservative/acidifier has a pH in the range 2.9 to 3.1.

4. Preservative/acidifier according to claim 1,
**characterised in that**
the preservative/acidifier contains propionic and/or acetic acid.

5. Preservative/acidifier according to claim 1,
**characterised in that**
the preservative/acidifier contains propionic and benzoic acid, 4.5 to 6.0 weight% potassium and has a pH in the range 2.9 to 3.3

## Patentansprüche

1. Wässriges Konservierungs-/Säuerungsmittel für Gras und andere landwirtschaftliche Nutzpflanzen, Fisch und Fischprodukte sowie Fleischprodukte, mit reduzierter Korrosivität und Reizung auf der Haut, umfassend wenigstens 50 Gew.-% entweder Ameisensäure und Formatsalze oder Ammoniumtetraformat und 2-6 Gew.-% Kalium oder 2-10 Gew.-% Natrium in der Form ihres Hydroxids, Formats oder anderer geeigneter Kalium- oder Natriumverbindungen, die den pH-Wert des Konservierungs-/Säuerungsmittels erhöhen.

2. Konservierungs-/Säuerungsmittel nach Anspruch 1, **dadurch gekennzeichnet, dass** das Konservierungs-/Säuerungsmittel 4-7 Gew.-% Ammoniak enthält und dass der pH-Wert des Konservierungs-/Säuerungsmittels im Bereich von 2,7-3,5 liegt.

3. Konservierungs-/Säuerungsmittel nach Anspruch 1, **dadurch gekennzeichnet, dass** das Konservierungs-/Säuerungsmittel einen pH-Wert im Bereich von 2,9-3,1 hat.

4. Konservierungs-/Säuerungsmittel nach Anspruch 1, **dadurch gekennzeichnet, dass** das Konservierungs-/Säuerungsmittel Propion- und/oder Essigsäure enthält.

5. Konservierungs-/Säuerungsmittel nach Anspruch 1, **dadurch gekennzeichnet, dass** das Konservierungs-/Säuerungsmittel Propion- und Benzoesäure, 4,5 bis 6,0 Gew.-% Kalium enthält und einen pH-Wert im Bereich von 2,9 bis 3,3 hat.

## Revendications

1. Conservateur/acidifiant aqueux pour herbe et autres récoltes agricoles, poisson et produits du poisson, et produits carnés, ayant une moindre corrosivité et irritation de la peau, comprenant au moins 50% en poids, soit d'acide formique et de sels formiates, soit de tétraformiate d'ammonium, et 2-6% en poids de potassium ou 2-10% en poids de sodium sous forme de leur hydroxyde, formiate ou autres composés adéquats du potassium ou du sodium, ce qui augmente le pH du conservateur/acidifiant.

2. Conservateur/acidifiant selon la revendication 1,
**caractérisé en ce que**
le conservateur/acidifiant contient 4-7% en poids d'ammoniac et que le pH du conservateur/acidifiant est dans la plage 2,7 à 3,5.

3. Conservateur/acidifiant selon la revendication 1,
**caractérisé en ce que**
le conservateur/acidifiant a un pH dans la plage 2,9 à 3,1.

4. Conservateur/acidifiant selon la revendication 1,
**caractérisé en ce que**
le conservateur/acidifiant contient de l'acide proprionique et/ou acétique.

5. Conservateur/acidifiant selon la revendication 1,
**caractérisé en ce que**
le conservateur/acidifiant contient de l'acide proprionique et benzoïque, 4,5 à 6,0% en poids de potassium et a un pH dans la plage 2,9 à 3,3.
